# EUROPEAN PATENT APPLICATION

(11) **EP 2 645 448 A1**
(43) Date of publication of application: **02.10.2013**
(21) Application number: 13156090.6
(22) Date of filing: 21.02.2013
(51) Int. Cl.: H01M 2/10, H01M 10/42

(54) **Battery pack and battery system**

(30) Priority: 28.03.2012 JP 2012072716
(71) Applicant: Hitachi Ltd., Tokyo 100-8280 (JP)
(72) Inventor: Takahashi, Toshiki, Tokyo, 100-8220 (JP); Takeda, Kenji, Tokyo, 100-8220 (JP)
(74) Representative: MERH-IP Matias Erny Reichl Hoffmann

(57) **Abstract**

A battery pack in which an increase in size is restrained even if the battery pack 40 includes plural battery modules 30 with fuses is to be provided. In order to solve the foregoing problem, a battery pack 40 according to the invention includes at least two or more battery modules 30, each battery module 30 having a battery cell Bn1, Bnx and a first fuse 32 connected in series with the battery cell Bn1, Bnx, the battery cell Bn1, Bnx and the first fuse 32 being housed in a casing. A positive electrode terminal 1 provided in one battery module 30 and a negative electrode terminal 2 provided in another battery module 30 are connected to each other via a second fuse 33. The second fuse 33 has a higher rated voltage than the first fuse 32.

## Description

### BACKGROUND OF THE INVENTION

### FIELD OF THE INVENTION

The present invention relates to a battery system equipped with a fuse.

### DESCRIPTION OF THE RELATED ART

A battery system that is recently under development can be used for various purposes, and the scale of the battery system varies depending on the purpose of use. Particularly, a battery system used to restrain load fluctuation and cope with blackouts at a server center or the like, or to stabilize a large-scale system such as a regenerative energy storage system for railways, renewable energy system or nuclear power station, is of a large scale. In this large-scale battery system, plural battery modules as minimum units of use are connected in series to form a battery pack, and plural such battery packs are connected in parallel. Such a large-scale battery system is assumed to be used for a long period and therefore maintenance is needed.

The above maintenance is carried out, for example, by inspecting the state of deterioration of the currently used battery module and determining whether the battery module is approaching a limit of use or is already beyond the limit of use. The battery module that is approaching the limit of use or is already beyond the limit of use is to be replaced. Meanwhile, as disclosed in JP-A-2010-122194, the battery module that is assumed to be replaced when necessary is provided with a fuse so that the battery module can tolerate a maximum voltage of the system and hence can be protected from overcurrent and overvoltage due to wiring errors at the time of replacement.

However, according to the invention disclosed in JP-A-2010-122194, a fuse with a high voltage resistance needs to be installed within the module and this causes an increase in the volume of the battery module itself when constructing a large-scale battery system. Therefore, there is a problem that the battery system itself is increased in size.

### SUMMARY OF THE INVENTION

Thus, it is an object of the invention to provide a battery pack in which an increase in size is restrained even if the battery pack includes plural battery modules with fuses.

In order to solve the foregoing problem, a battery pack according to an aspect of the invention includes at least two or more battery modules, each battery module having a battery cell and a first fuse connected in series with the battery cell, the battery cell and the first fuse being housed in a casing. A positive electrode terminal provided in one battery module and a negative electrode terminal provided in another battery module are connected to each other via a second fuse. The second fuse has a higher rated voltage than the first fuse.

Moreover, in order to solve the foregoing problem, a battery system according to an aspect of the invention includes a plural number of the battery packs connected in parallel and a resistance element corresponding to each of the plural battery packs.

By carrying out the invention, an increase in size can be restrained even if the battery pack includes plural battery modules with fuses.

### BRIEF DESCRIPTION OF THE DRAWINGS

FIG. 1 shows a power generation system according to the invention.
FIG. 2 is a block diagram of a battery system according to the invention.
FIG. 3 is a circuit diagram of a battery module according to the invention.
FIG. 4 shows the configuration of the battery module according to the invention.
FIG. 5 is a circuit diagram of the battery system according to the invention.
FIG. 6 is a perspective view of a battery pack according to the invention.

### DESCRIPTION OF THE PREFERRED EMBODIMENTS

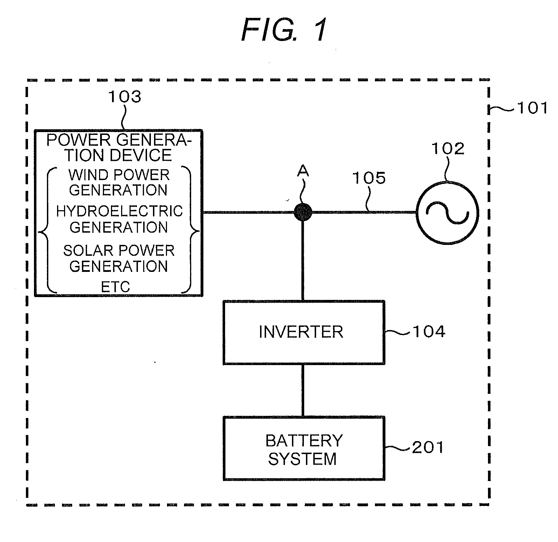

Hereinafter, an embodiment of the invention will be described with reference to the drawings. First, a power generation system according to the invention will be described with reference to FIG. 1. A power generation system 101 includes a power generation device 103, an electric power system 102, an electric wire 105 connecting the electric power system 102 and the power generation device 103, and a battery system 201 connected to the electric wire 105 via an inverter 104. The power generation device 103 is, for example, a wind power generation facility, hydroelectric generation facility, solar power generation facility or another type of power generation facility.

The battery system 201 charges with generated electric power when the power generation device 103 generates excess power that is greater than electric power required by the electric power system 102, and the battery system 201 discharges electric power when the amount of power generation by the power generation device 103 is smaller than electric power required by the electric power system 102, thus realizing stable supply of electric power. When the battery system 201 charges and discharges, electric power is supplied and received after the inverter 104 carries out AC-DC and DC-AC conversion.

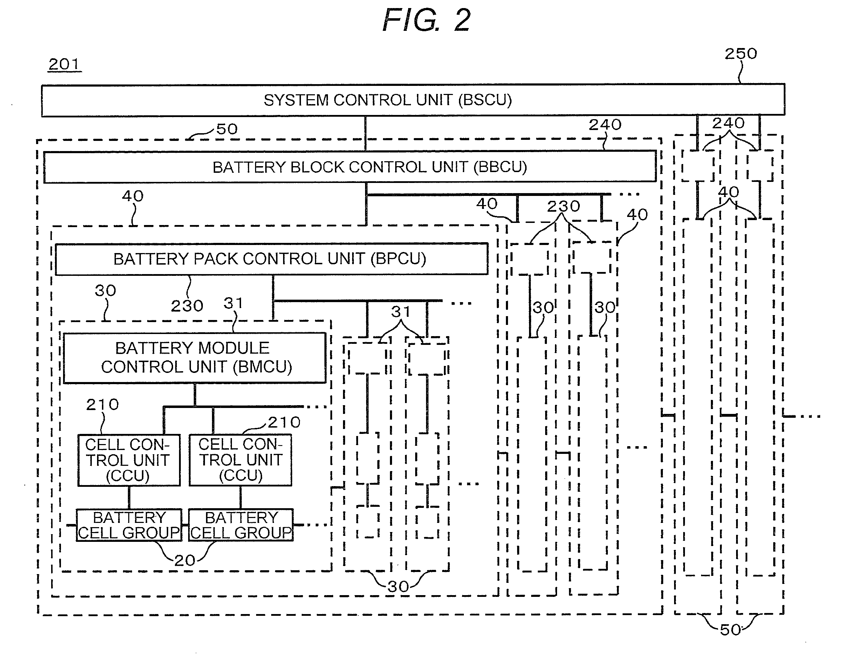

Next, a block diagram of the battery system 201 is shown in FIG. 2. The battery system 201 according to the invention includes a battery module 30 as a minimum unit, a battery pack 40 including plural battery modules 30, and a battery block 50 including plural battery packs 40.

First, the configuration of the battery module 30 will be described specifically. The battery module 30 has plural battery cell groups 20, a cell control unit (CCU) 210 which collects battery information of the battery cell groups 20 (for example, current information, voltage information, temperature information, state of charge and the like of battery cells), and a battery module control unit (BMCU) 31. The cell control unit 210 also performs balancing control between battery cells, which will be described later. The battery information collected by the cell control unit 210 is sent to the battery module control unit (BMCU) 31. The battery module control unit (BMCU) 31 calculates an average state of charge of the battery cell groups 20 in the battery module 30, adds the battery information of the average state of charge of the battery cell groups 20 to the above battery information, and transmits the battery information to a higher-level battery pack control unit (BPCU) 230.

The battery pack 40 has plural battery modules 30 and a battery pack control unit 230. The battery pack control unit 230 collects battery information outputted from each battery module control unit 31 and calculates information of an average state of charge of the battery modules 30, which is the average of the states of charge of the battery modules 30 in the battery pack 40. The information of the average state of charge of the plural battery modules 30 is added to the battery information acquired from the battery module control unit 31, and the battery information is outputted to a battery block control unit 240, which is on a still higher level.

The battery block 50 has plural battery packs 40 and a battery block control unit 240. The battery block control unit 240 collects battery information outputted from each battery pack control unit 230 and calculates information of an average state of charge of the battery packs 40, which is the average of the states of charge of the battery packs 40 in the battery block 50. The information of the average state of charge of the plural battery packs 40 is added to the battery information acquired from the battery pack control unit 230, and the battery information is outputted to a system control unit 250, which is on a still higher level. In this description, there are plural battery packs 40 in the battery block 50. However, only one battery pack 40 may form the battery block 50. In such a case, the battery block control unit 240 outputs the battery information outputted from the battery pack control unit 230, directly to the system control unit 250.

According to the invention, since the states of batteries are thus monitored in plural hierarchical levels, the battery system 201 has a high level of safety. Also, since each of the battery module 30, the battery pack 40 and the battery block 50 according to the invention can be replaced on the respective levels, the battery system is easy to maintain.

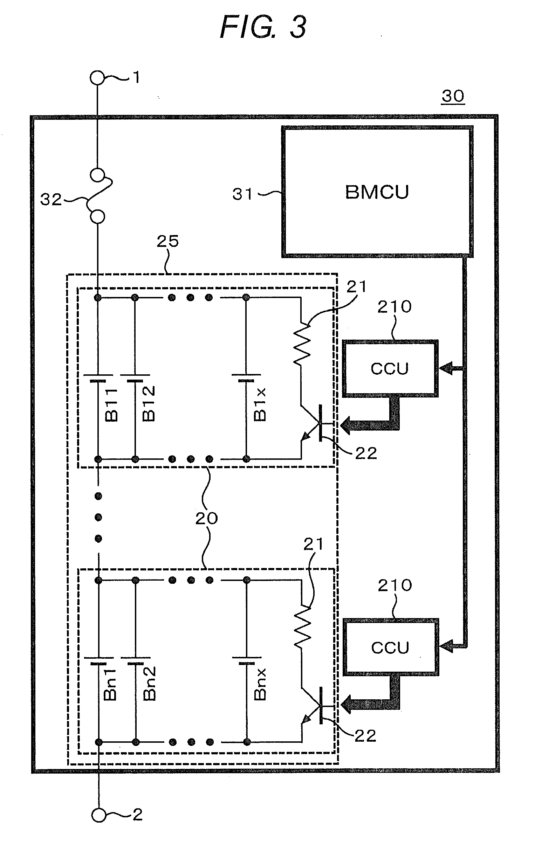

Next, the specific circuit configuration of the battery module 30 will be described with reference to FIG. 3. The battery module 30 is provided with a power-supply circuit 25 in which plural battery cell groups 20 are connected in series, and a fuse 32 connected in series with the power-supply circuit.

The side of the fuse 32 that is not connected to the power-supply circuit 25 is connected to a positive electrode-side terminal 1, which is connected to another device (including another battery module 30) arranged outside this battery module 30.

Meanwhile, a negative electrode side of the power-supply circuit 25 is connected to a negative electrode-side terminal 2. The negative electrode-side terminal 2, too, is connected to another device (including another battery module 30).

The battery cell group 20 includes plural battery cells Bn1, Bn2 ... BnX connected in parallel (where n is greater than 1 and is the number of battery cell groups 20 connected in series, and X is the number of cells). Also, a resistance element 21 and a switch element 22 are connected parallel to the battery cell group 20. The resistance element 21 and the switch element 22 are for taking balance, for example, among battery cells B11, B12 ... B1X when voltage and state of charge vary among the battery cells B11, B12 ... B1X.

The cell control unit 210 acquires battery information of each battery cell Bn1, Bn2 ... BnX and outputs the battery information to the battery module control unit 31. The battery module control unit 31 calculates the state of charge (SOC) of each battery cell based on the battery information outputted from each cell control unit 210 and outputs the information of the state of charge to the cell control unit 210. For example, the cell control unit 210, after receiving the information of the state of charge, outputs a signal to turn on the switch element 22 when the difference in the state of charge among the battery cells Bn1, Bn2 ... BnX in the battery cell group 20 monitored by the cell control unit 210 becomes 10% or greater, thus taking balance among the battery cells Bn1, Bn2 ... BnX.

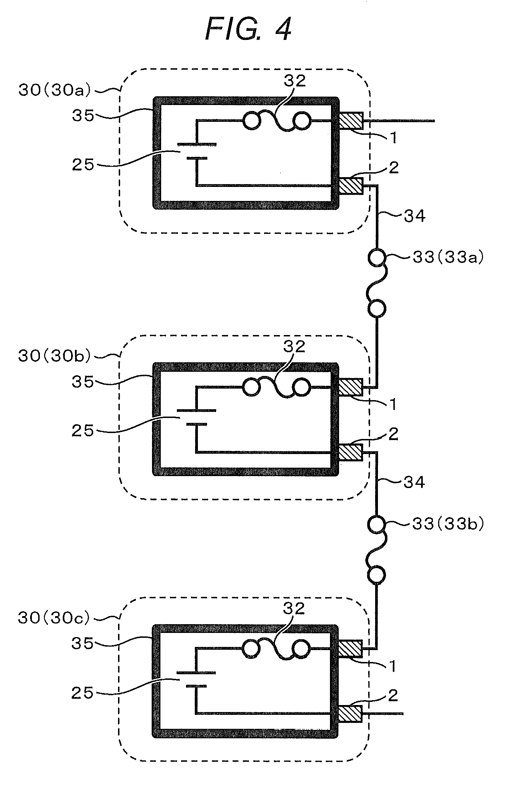

Also, a configuration in which plural battery modules 30 are connected in series will be described with reference to FIG. 4. In FIG. 4, a configuration in which three battery modules 30a, 30b and 30c are connected in series is used to simply the explanation. However, the number of the battery modules 30 connected in series is not limited to this number.

As described with reference to FIG. 3, the battery module 30 has the power-supply circuit 25 and the fuse 32 connected in series with the power-supply circuit 25, inside a casing 35. Also, the positive electrode-side terminal 1 and the negative electrode-side terminal 2 are provided on the casing 35.

Here, the connection of the battery module 30b as a center unit to each of the battery modules 30a and 30c will be described specifically. The positive electrode-side terminal 1 of the battery module 30b is connected to the negative electrode-side terminal 2 of the neighboring battery module 30a via a fuse 33 (33a), using a connection line 34 such as bus bar. Also, the battery module 30c next to the battery module 30b is connected using a similar configuration to the connection between the battery module 30b and the battery module 30a.

The fuse 33 has a higher voltage resistance than the fuse 32 provided inside the battery module 30 and has a greater volume than the fuse 32. Therefore, by providing the fuse 32 with a lower voltage resistance (rated voltage) than the fuse 33, within the battery module, a smaller size can be realized than in the case where a high voltage-resistance fuse is provided inside the battery module 30, while minimum necessary safety of the battery module 30 is secured. Also, by providing the fuse 33 with a high voltage resistance, that is, with a high rated voltage between the battery modules 30 after the small-size fuse 32 is provided in the battery modules 30, the battery modules 30 can be miniaturized while sufficient safety as the battery system is secured.

Moreover, by configuring the high voltage-resistance fuse 33 to break at a lower current than the low voltage-resistance fuse 32, the high voltage-resistance fuse 33 can be made to break first when an abnormality occurs. With this configuration, even when an abnormality occurs in the battery system or when a maintenance worker makes an error in wiring, the fuse 33 arranged outside the battery module 30 breaks and therefore it suffices to replace the fuse 33 alone instead of replacing the battery module 30. Thus, ease of maintenance is improved further.

The voltage resistance (rated voltage) of the low voltage-resistance fuse 32 is equal to or higher than the maximum voltage of the battery module 30, and the fuse 32 is made to break, for example, when an external short circuit is formed in the battery module alone. As the fusing current (rated current), the fuse 32 is made to break approximately at twice the maximum current specified in the specifications of the battery module 30, or greater. As an example of the voltage resistance (rated voltage) and fusing current (rated current) of the low voltage-resistance fuse 32, when the maximum voltage of the battery module 30 is 30 V, the rated voltage is 30 V or higher, and when the maximum current specified in the specifications of the battery module 30 is 20A, the fusing current (rated current) is 40A or higher.

Meanwhile, the voltage resistance (rated voltage) of the high voltage-resistance fuse 33 is equal to or higher than the maximum voltage of the battery pack 40, and the fuse 33 is made to break, for example, when there is an overload in the operation of the battery system. As the fusing current (rated current), the fuse 33 is made to break at a current equal to or higher than the maximum current specified in the specifications of the battery pack 40 and lower than the rated current of the low voltage-resistance fuse. As an example of the voltage resistance (rated voltage) and fusing current (rated current) of the high voltage-resistance fuse 33, when the maximum voltage of the battery pack 40 is 480 V, the rated voltage is 480 V or higher, and when the maximum current specified in the specifications of the battery pack 40 is 20A, the fusing current (rated current) is 20A or higher and lower than 40A.

With such a configuration, the battery system as a whole can be miniaturized while ease of maintenance is improved. Thus, higher safety can be secured.

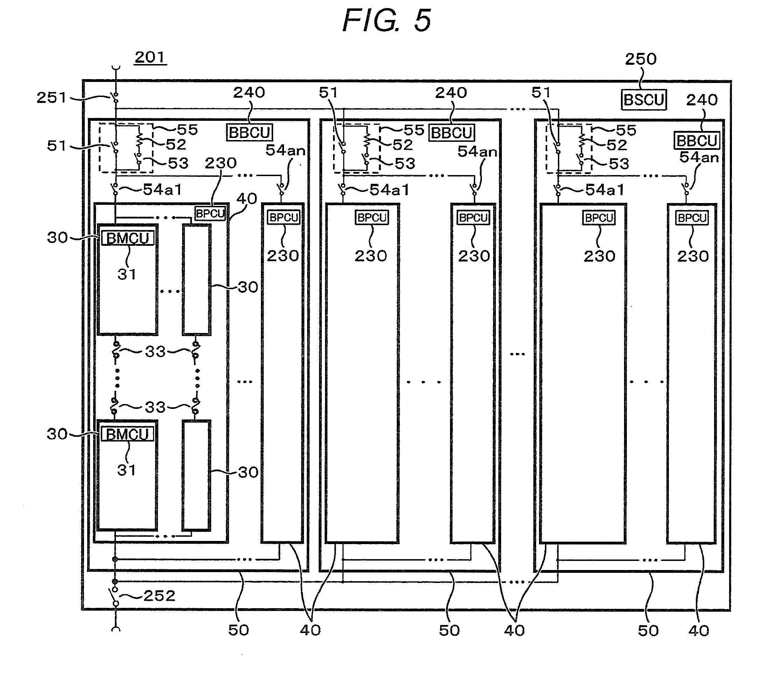

Next, the circuit configuration of the battery system 201 will be described with reference to FIG. 5. FIG. 5 shows the battery system 201 in which plural battery blocks 50 are connected in parallel, each battery block 50 having battery packs 40 each of which includes plural battery modules 30.

First, the configuration of the battery block 50 will be described. The battery block 50 has the battery packs 40 a pre-charge circuit 55 connected in series with the battery packs 40. The battery blocks 50 are connected parallel to each other and are connected to a positive electrode side of the inverter 104 via a switch unit 251 and to a negative electrode side of the inverter 104 via a switch unit 252.

The pre-charge circuit 55 includes a switch element 51, and a resistance element 52 and a switch element 53 which are connected parallel to the switch element 51. When there is a difference in the state of charge or voltage from the other battery blocks 50, the pre-charge circuit 55 maintains a certain period during which the switch unit 251 and the switch unit 252 are off, the switch element 51 is off and the switch element 53 is on. Thus, the difference in the state of charge or voltage among the individual battery blocks 50 can be reduced, using cross-current.

The battery block 50 also has switch elements 54a1 (54a), 54a2 (54a) ... 54an (54a) (where n is the number of battery packs 40 connected in parallel within the battery block 50) connected in series corresponding to each battery pack 40. When a problem occurs in each battery pack 40, the switch element 54a corresponding to the battery pack 40 with the problem is opened and this battery pack 40 can thus be disconnected from the other battery packs 40. Also, with such a configuration, at the time of maintenance, overvoltage can be prevented from being applied to the battery packs 40 by opening the switch elements 54a. Therefore, safety in operation is secured at the time of maintenance of the battery packs 40 and double protection of the battery system as a whole is possible with the fuses 32 and 33. Thus, safety and ease of maintenance are improved further.

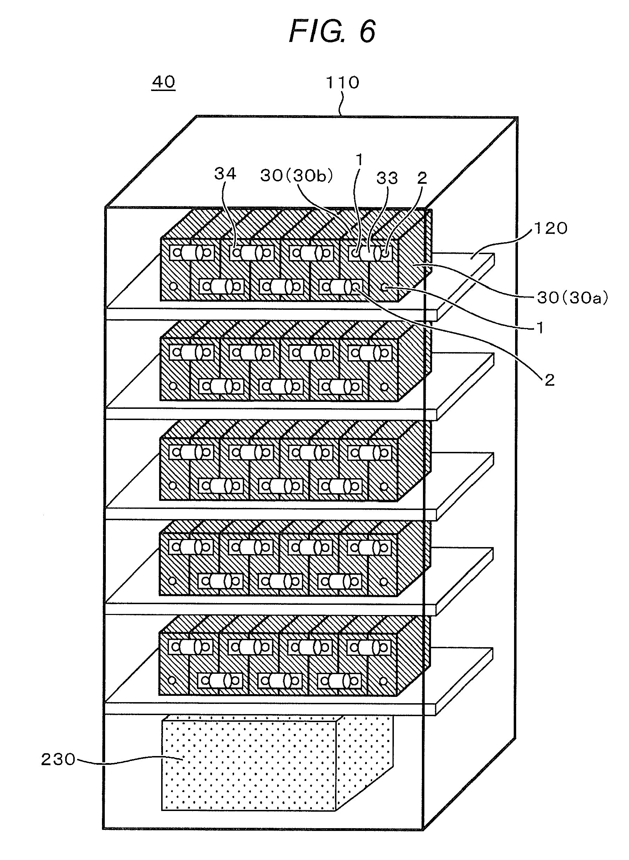

Finally, a perspective view of the battery pack 40 is shown in FIG. 6. The battery pack 40 has a module installation table 120 where plural battery modules 30 are installed, the battery pack control unit 230, and a battery rack 110 in which these units are installed. In this embodiment, the battery pack control unit 230 is arranged in a lower part of the battery rack 110. However, the battery pack control unit 230 may be arranged in an upper part. Also, by arranging the battery modules 30 closely to each other, the battery pack 40 as a whole can be further miniaturized, utilizing the battery modules 30 which are miniaturized with the high voltage-resistance fuses 33 arranged outside of the casings 35 of the battery modules. Even if the battery modules 30 are slightly spaced from each other instead of being in tight contact with each other, the battery pack 40 has a small size because the battery modules 30 themselves are small in size.

The plural battery modules 30 are connected to the neighboring battery modules 30 via the connection line 34. Here, if the battery modules are connected in such a way that the negative electrode-side terminal 2 of the one battery module 30a and the positive electrode-side terminal 1 of the next battery module 30b are laid side by side, the fuse 33 arranged on the upper side of the battery module 30 and the fuse 33 arranged on the lower side of the battery module become alternate with respect to a direction substantially parallel to an installation surface of the module installation table 120, as shown in FIG. 6. With such an arrangement, even in the battery pack 40 in which the small-size battery modules are arranged in tight contact with each other to save space, sufficient work space to replace the fuse 33 can be secured. Thus, a battery system in which ease of maintenance and safety are improved while the battery pack 40 is miniaturized as a whole by the miniaturization of the battery module 30 can be provided.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A battery pack comprising at least two or more battery modules (30), each battery module (30) having a battery cell (Bn1, Bnx) and a first fuse connected in series with the battery cell (Bn1, Bnx), the battery cell (Bn1, Bnx) and the first fuse (32) being housed in a casing,
wherein a positive electrode terminal (1) provided in one battery module (30) and a negative electrode terminal (2) provided in another battery module (30) are connected to each other via a second fuse (33), and
the second fuse (33) has a higher rated voltage than the first fuse (32).

2. The battery pack according to claim 1, wherein
the second fuse (33) breaks at a lower current than a current at which the first fuses (32) breaks.

3. The battery pack according to claim 1 or 2, wherein
the battery pack (40) has a table (120) on which the two or more battery modules (30) are installed, and
the one battery module (30) and the another battery module (30) are arranged next to each other in such a way that the positive electrode terminal (1) of the one battery module (30) and the negative electrode terminal (2) of the another battery module (30) are arranged at substantially parallel positions to the table (120).

4. The battery pack according to claim 3, wherein
the one battery module (30) and the another battery module (30) are installed in tight contact with each other on the table (120).

5. The battery pack according to any one of claims 1 to 4, wherein
the second fuse (33) has a rated voltage that is equal to or higher than a maximum voltage of the battery pack (40).

6. The battery pack according to any one of claims 1 to 5, wherein
a current at which the first fuse (32) breaks is double a maximum current of the battery module (30) or higher.

7. A battery system comprising
a plural number of the battery packs (40) according to any one of claims 1 to 5, connected in parallel, and
a resistance element corresponding to each of the plural battery packs (40).
